# EUROPÄISCHE PATENTSCHRIFT

(11) **EP 3 412 543 B1**
(45) Veröffentlichungstag und Bekanntmachung des Hinweises auf die Patenterteilung: **26.08.2020**
(21) Anmeldenummer: 18170955.1
(22) Anmeldetag: 07.05.2018
(51) Int. Cl.: B62H 5/00, B62J 11/00, E05B 71/00

(54) **ZWEIRAD-SCHLOSS HALTERUNGSANORDNUNG**
BICYCLE LOCK HOLDER ARRANGEMENT
DISPOSITIF DE SUPPORT DE VERROUILLAGE DES DEUX ROUES

(30) Priorität: 09.06.2017 DE 202017103486 U
(43) Veröffentlichungstag der Anmeldung: 12.12.2018
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A1- 3 106 376
- EP-A2- 2 987 710
- CN-U- 203 753 285
- CN-U- 204 452 673
- CN-U- 205 075 933
- DE-U1-202005 013 390
- DE-U1-202007 011 170

## Beschreibung

Die vorliegende Erfindung betrifft eine Halterungsanordnung für ein Zweirad-Schloss vom Typ eines Faltschlosses, mit einem Träger, der sich entlang einer Längsachse erstreckt und eine Befestigungseinrichtung zur Befestigung des Trägers an einem Rohrabschnitt eines Zweirads aufweist, wobei der Träger einen Aufnahmebereich zum Aufnehmen des Zweirad-Schlosses begrenzt, und ferner mit einem am Träger gelagerten, zwischen einer Offenstellung und einer Geschlossenstellung beweglichen Fixierelement zum Festlegen des Zweirad-Schlosses in dem Aufnahmebereich, wobei an dem Träger ein Stützelement vorgesehen ist, welches das in dem Aufnahmebereich aufgenommene Zweirad-Schloss gegen eine Bewegung entlang der Längsachse des Trägers abstützt.

Derartige Faltschlösser dienen beispielsweise zum Sichern eines Zweirads an einem Fahrradständer, einem Laternenpfosten oder dergleichen. Hierfür umfasst das Faltschloss einen Schlosskörper und einen daran befestigten Gelenkstabbügel, welcher mehrere schwenkbar miteinander verbundene Gelenkstäbe aufweist, die zu einer achsparallelen Anordnung zusammenfaltbar sind. Für den Gebrauch des Faltschlosses werden die Gelenkstäbe auseinandergefaltet, um eine offene Schlaufe zu bilden, welche beispielsweise einen Rahmenabschnitt des Zweirads und den Fahrradständer, Laternenpfosten oder dergleichen umgreifen kann. Um das Zweirad gegen unbefugte Verwendung zu sichern, wird sodann die Schlaufe geschlossen, und ein freies Ende der Schlaufe bzw. des Gelenkstabbügels wird an dem Schlosskörper verriegelt.

Für den Transport des Faltschlosses durch den befugten Benutzer während einer Fahrt mit dem Zweirad können die Gelenkstäbe nach einem Entriegeln des Faltschlosses zu einer kompakten Anordnung (so genannte Zollstockkonfiguration) zusammengefaltet werden. In dieser Konfiguration kann das Faltschloss in der Halterungsanordnung aufgenommen werden. Üblicherweise werden derartige Halterungsanordnungen an einem Rohrabschnitt des Rahmens, des Gepäckträgers oder des Sattelrohrs des Zweirads befestigt.

Ein beispielhaftes Faltschloss ist aus der DE 10 2005 040 066 B4 bekannt. Die DE 20 2005 013 390 U1 beschreibt eine Tasche für ein Faltschloss.

Sofern die Halterungsanordnung mit einem beweglichen Fixierelement ausgestattet ist, muss dieses lediglich in die Geschlossenstellung bewegt werden, um das Zweirad-Schloss in dem Aufnahmebereich der Halterungsanordnung festzulegen.

Die Halterungsanordnung kann ferner ein Stützelement aufweisen, welches das in dem Aufnahmebereich aufgenommene Zweirad-Schloss gegen eine Bewegung in Längsrichtung abstützt. Ein derartiges Stützelement kann beispielsweise durch den Boden einer Tasche oder einer Lagerschale gebildet sein.

Allerdings kann es in Abhängigkeit von der Geometrie des Rahmens des Zweirads schwierig sein, das Zweirad-Schloss entlang seiner Längsachse in eine Tasche oder schräg in eine Lagerschale einzuführen, beispielsweise weil ein oberhalb der Halterungsanordnung verlaufendes Oberrohr des Rahmens den Einführweg beschränkt.

Des Weiteren ist es ein Nachteil gängiger Halterungsanordnungen mit Tasche oder Lagerschale, dass die Länge des Zweirad-Schlosses, welches aufgenommen wird, durch den Boden der Tasche bzw. der Lagerschale begrenzt wird. Diesbezüglich ist es wünschenswert, dass eine Halterungsanordnung für mehrere verschiedene Typen bzw. Größen von Zweirad-Schlössern universell verwendbar ist.

Nachteilig ist es auch, wenn das in der Halterungsanordnung aufgenommene Zweirad-Schloss, etwa wegen eines Spiels aufgrund von Fertigungstoleranzen, während der Fahrt mit dem Zweirad aufgrund der hierbei auftretenden Erschütterungen unerwünschte Rüttelgeräusche verursacht.

Aus der EP 2 987 710 A2 ist eine gattungsgemäße Halterung bekannt. gemäß der Präambel von Anspruch 1. Aus CN 203 753 285 U und CN 205 075 933 U sind weitere Halterungen bekannt.

Es ist eine Aufgabe der Erfindung, eine Halterungsanordnung für ein Zweirad-Schloss vom Typ eines Faltschlosses anzugeben, welche die vorgenannten Nachteile beseitigt und insbesondere einfach zu handhaben sowie universell verwendbar ist.

Diese Aufgabe wird durch eine Halterungsanordnung mit den Merkmalen des Anspruchs 1 gelöst.

Bei dieser Halterungsanordnung für ein Zweirad-Schloss vom Typ eines Faltschlosses wird demnach das typischerweise längliche Zweirad-Schloss zunächst mit Hilfe eines Stützelements entlang seiner Längsachse an dem Träger festgelegt. Das Stützelement kann an einem oberen Bereich des Trägers vorgesehen sein. Das Stützelement erstreckt sich ausgehend von dem Träger entlang einer quer zu der Längsachse ausgerichteten Querachse und kann somit insbesondere einen Vorsprung des Trägers bilden. Ist das Fixierelement geöffnet, so ist das Stützelement entlang der genannten Querachse frei zugänglich, und das Stützelement bildet das einzige Element, welches das Zweirad-Schloss innerhalb des Aufnahmebereichs der Halterungsanordnung entlang der Längsachse des Trägers hält, insbesondere bezüglich zweier zueinander entgegengesetzten Richtungen entlang der Längsachse (z.B. Abstützen nach oben und nach unten). Das Stützelement greift für das axiale Festlegen des Zweirad-Schlosses in eine Aussparung beispielsweise im oberen Bereich des Zweirad-Schlosses (bei zusammengefaltetem Gelenkstabbügel). Bei der genannten Aussparung kann es sich insbesondere um einen Zwischenraum zwischen dem Schlosskörper und dem Gelenkstabbügel des Zweirad-Schlosses handeln. Das Zweirad-Schloss kann somit an dem Stützelement eingehängt werden, insbesondere frontal, d.h. an einer Vorderseite des Trägers.

Sodann kann das Zweirad-Schloss durch ein Bewegen des Fixierelements in die Geschlossenstellung gegen eine Entnahme von dem Stützelement entlang der Querachse gesichert und hierdurch endgültig fixiert werden. Das Fixierelement verhindert in der Geschlossenstellung also, dass das Stützelement unbeabsichtigt wieder außer Eingriff mit der Aussparung des Zweirad-Schlosses gerät, wobei das Fixierelement das Faltschloss insbesondere umfänglich umgreifen kann. Auch in der Geschlossenstellung des Fixierelements kann das Stützelement - abgesehen von einem gewissen Kraftschluss bzw. Reibschluss aufgrund des genannten umfänglichen Umgreifens durch das Fixierelement - zumindest im Wesentlichen das einzige Element der Halterungsanordnung sein, welches das in dem Aufnahmebereich aufgenommene Zweirad-Schloss gegen eine Bewegung entlang der Längsachse des Trägers abstützt.

Hierdurch ergibt sich eine einfache Handhabung der Halterungsanordnung da in einem ersten Schritt das Zweirad-Schloss in der Offenstellung des Fixierelements leicht auf das Stützelement aufgesetzt bzw. an dem Stützelement eingehängt werden kann und danach in einem zweiten Schritt das Fixierelement nur noch in die Geschlossenstellung gebracht werden muss. Für das vorläufige Befestigen des Zweirad-Schlosses an dem Stützelement macht man sich hierbei zu Nutze, dass bei zusammengefaltetem Gelenkstabbügel (Zollstockkonfiguration) durch die Reibung zwischen den benachbarten Gelenkstäben typischerweise eine quasistabile Struktur gebildet wird, d.h. der Gelenkstabbügel verbleibt in dem zusammengefalteten Zustand, sodass das Zweirad-Schloss leicht an dem Stützelement eingehängt werden kann. Auch eine Einhand-Bedienung ist sowohl bei dem Einhängen als auch bei dem Schließen des Fixierelements möglich. Eine besonders einfache Handhabung ergibt sich hierbei insbesondere, wenn das Fixierelement einen schwenkbaren Fixierbügel aufweist, und/oder wenn zum Beibehalten der Geschlossenstellung des Fixierelements ein freies Ende des Fixierelements mittels einer Rasteinrichtung an dem Träger arretierbar, d.h. lagefixierbar, ist, wie nachstehend noch erläutert wird.

Da das Stützelement entlang der genannten Querachse von dem Träger absteht und entlang der Querachse in eine Aussparung des Zweirad-Schlosses eingreift, kann das Zweirad-Schloss zumindest im Wesentlichen frontal auf den Träger aufgesetzt werden, ohne dass dieses Einführen des Zweirad-Schlosses in den Aufnahmebereich der Halterungsanordnung durch Rahmenabschnitte des Zweirads in der Umgebung der Halterungsanordnung behindert wird.

Da ferner das in die Aussparung des Zweirad-Schlosses eingreifende Stützelement das einzige Element ist, welches in der Offenstellung des Fixierelements das Zweirad-Schloss gegen eine Bewegung entlang der Längsachse des Trägers sichert, erfolgt kein Abstützen des Zweirad-Schlosses an einem Längsende des Zweirad-Schlosses, und die Verwendung der Halterungsanordnung ist nicht auf eine einzige Länge eines passenden Zweirad-Schlosses eingeschränkt. Insbesondere kann der Aufnahmebereich für das Zweirad-Schloss - abgesehen von dem genannten Stützelement - beiderseits des Fixierelements in Flucht zu der Längsachse des Trägers geöffnet sein, d.h. entlang der Längsachse betrachtet ist keine weitere Begrenzung des Aufnahmebereichs vorgesehen. Die Halterungsanordnung ist somit für verschiedene Längen von Zweirad-Schlössern universell verwendbar. Die Zweirad-Schlösser müssen lediglich im Bereich des Fixierelements gleichartig ausgebildet sein und insbesondere eine passende Aussparung für das Stützelement sowie eine passende Form für das Fixierelement der Halterungsanordnung aufweisen.

Im Rahmen der Erfindung wurde erkannt, dass die erforderliche Abstützung in Längsrichtung allein durch den Eingriff eines Stützelements in den bei einem Faltschloss typischerweise vorhandenen Zwischenraum zwischen Schlosskörper und Gelenkstabbügel bewerkstelligt werden kann, sodass beispielsweise eine unterseitige Abstützung des Zweirad-Schlosses vermieden werden kann und die Halterungsanordnung somit nicht auf eine einzige mögliche Länge des Zweirad-Schlosses festgelegt sein muss.

Schließlich wird durch die Kombination eines entlang einer Querachse abstehenden Stützelements mit einem entlang der Querachse wirksamen Fixierelement ein zumindest im Wesentlichen spielfreies Festlegen des Zweirad-Schlosses in der Halterungsanordnung möglich, da das Stützelement von einer Seite passgenau in die Aussparung des Zweirad-Schlosses eingreifen kann und das Zweirad-Schloss an einer hierzu gegenüber liegenden Seite durch das Fixierelement endgültig fixiert werden kann.

Gemäß einer Ausführungsform ist das Stützelement mit dem Träger zumindest im Wesentlichen starr verbunden.

Insbesondere kann das Stützelement integral, d.h. stoffschlüssig einteilig, am Träger angeformt sein. Durch die stoffschlüssige Verbindung vereinfacht sich die Fertigung, da der Träger mitsamt dem Stützelement hergestellt werden kann. Gemäß einer weiteren Ausführungsform weist das Stützelement die Form eines Aufliegestegs auf, der sich im Wesentlichen entlang der Querachse und entlang einer Richtung erstreckt, die senkrecht zu der Längsachse und zu der Querachse verläuft. Die Abmessungen des Aufliegestegs sind so gewählt, dass sie den lichten Abmessungen der Aussparung des zugeordneten Zweirad-Schlosses entsprechen. Der Aufliegesteg ermöglicht hierdurch ein passendes Einhängen des Zweirad-Schlosses an dem Träger.

Gemäß einer besonders vorteilhaften Ausführungsform verjüngt sich das Stützelement entlang der Querachse. Durch eine entlang der Querachse spitz zulaufende Form des Stützelements ist ein einfaches Einhängen des Zweirad-Schlosses innerhalb der Aussparung gegeben. Durch ein verjüngtes Ende des Stützelements ist zum Beispiel auch das Einhängen im Dunklen erleichtert. Ferner wird hierdurch ein zumindest im Wesentlichen spielfreier Sitz des Zweirad-Schlosses an dem Stützelement ermöglicht, da das Zweirad-Schloss so weit auf das Stützelement aufgesetzt werden kann, bis dieses formschlüssig an der Umgebung der genannten Aussparung anliegt.

Gemäß einer Ausführungsform ist das Fixierelement in der Geschlossenstellung zumindest im Wesentlichen entlang einer Richtung ausgerichtet, die innerhalb einer von dem Träger beabstandeten und zu der Querachse orthogonalen Ebene senkrecht zu der Längsachse des Trägers verläuft. Die Erstreckungsrichtung des Fixierelements kann somit die Längsachse des Trägers im rechten Winkel kreuzen, um das in dem Aufnahmebereich aufgenommene Zweirad-Schloss entlang seines Umfangs gegen ein unbeabsichtigtes Lösen von dem Stützelement zu blockieren.

Gemäß einer weiteren Ausführungsform ist das Fixierelement bzw. ein jeweiliger Abschnitt des Fixierelements senkrecht zu seiner Erstreckungsrichtung, nicht jedoch entlang seiner Erstreckungsrichtung elastisch. Dies bedeutet, dass ein jeweiliger Abschnitt des Fixierelements zwar rückfedernd verbogen, nicht jedoch entlang seiner Längserstreckung elastisch auseinandergezogen werden kann. Dies gilt insbesondere auch für mehrere, in verschiedene Richtung weisende Abschnitte des Fixierelements, beispielsweise wenn das Fixierelement im Wesentlichen U-förmig ist, wobei in diesem Fall die U-Form insgesamt (durch Verbiegen der einzelnen Abschnitte relativ zueinander) eine gewisse Längenelastizität aufweisen kann. Eine derartige eingeschränkte Elastizität des Fixierelements kann die Handhabung des Fixierelements vereinfachen. Insbesondere kann vorgesehen sein, dass das Fixierelement für das Verbringen in die Geschlossenstellung nicht mit einem unerwünscht hohen Kraftaufwand längengedehnt werden muss. Eine Elastizität des Fixierelements in seitlicher Richtung kann jedoch ein kraftschlüssiges Fixieren des Zweirad-Schlosses in dem Aufnahmebereich des Trägers ermöglichen oder unterstützen.

Gemäß einer Ausführungsform ist das Fixierelement zumindest im Wesentlichen formstabil ausgebildet. Aufgrund der Formstabilität des Fixierelements wird im Vergleich zu nicht formstabilen Fixierelementen (beispielsweise einer aus einem Elastomer hergestellten Lasche) eine vereinfachte Handhabung ermöglicht, da der Benutzer keine zusätzliche Kraft (und gegebenenfalls Gegenkraft zum Abstützen) aufbringen muss, um beim Schließen des Fixierelements die Form des Fixierelements an das Zweirad-Schloss anzupassen bzw. das Fixierelement zu dehnen.

Grundsätzlich ist es jedoch möglich, anstelle eines formstabilen Fixierelements beispielsweise eine längenelastische Lasche zu verwenden, die über das Zweirad-Schloss gespannt wird.

Gemäß einer vorteilhaften Ausführungsform ist das Fixierelement bezüglich des Aufnahmebereichs für das Zweirad-Schloss konvex gewölbt. Auf das in dem Aufnahmebereich befindliche Zweirad-Schloss kann durch eine konvexe Wölbung eine Andruckkraft erzeugt oder unterstützt werden.

Gemäß einer Ausführungsform umschließt das Fixierelement in der Geschlossenstellung den Aufnahmebereich umfänglich. Die Umfangsrichtung des Aufnahmebereichs bezieht sich in diesem Zusammenhang insbesondere auf die genannte Längsachse des Trägers, d.h. der genannte Umfang erstreckt sich zumindest im Wesentlichen entlang einer Orthogonalebene zu der Längsachse des Trägers. Durch den entlang des gesamten Umfangs geschlossenen Aufnahmebereich wird eine Sicherung des Zweirad-Schlosses vor einem seitlichen Verlassen des Aufnahmebereichs geschaffen.

Gemäß einer bevorzugten Ausführungsform weist das Fixierelement einen Fixierbügel auf, der an dem Träger zwischen der Offenstellung und Geschlossenstellung schwenkbar gelagert ist. Durch die Ausbildung des Fixierelements zu einem formstabilen, schwenkbar gelagerten Fixierbügel wird die Handhabung der Zweirad-Halterungsanordnung zusätzlich vereinfacht. Durch die schwenkbare Lagerung kann der Fixierbügel intuitiv in die Offenstellung und Geschlossenstellung geführt werden. Eine besonders einfache Handhabung der Halterungsanordnung ergibt sich, wenn der Fixierbügel abgesehen von Reibungskräften im Wesentlichen kräftefrei zwischen der Offenstellung und der Geschlossenstellung geschwenkt werden kann.

Gemäß einer Ausführungsform ist der Fixierbügel im Wesentlichen U-förmig. Insbesondere kann der Fixierbügel einen Basisabschnitt aufweisen, der zwischen zwei Schenkelabschnitten angeordnet ist. Durch die U-förmige Ausbildung des Fixierbügels ist eine optimale Umschließung des typischerweise quaderförmigen Aufnahmebereichs möglich. Hierdurch kann das Zweirad-Schloss fest fixiert und gegen ein seitliches Verlassen des Aufnahmebereichs gesichert werden. Gemäß einer Ausführungsform ist der Fixierbügel mittels wenigstens eines Scharniers an dem Träger schwenkbar gelagert. Hierdurch wird die einhändige Verwendung durch das Scharnier erleichtert. Insbesondere ist durch das Scharnier eine freie Schwenkbarkeit des Fixierbügels möglich, wobei der Fixierbügel zunächst im Wesentlichen kräftefrei in Richtung der Geschlossenstellung bewegt wird und der Benutzer erst beim endgültigen Schließen den Fixierbügel gegen das Zweirad-Schloss spannt. Durch das Scharnier wird eine intuitive Handhabung der Halterung bewirkt, da dem Benutzer hierdurch die Bewegungsrichtung des Fixierbügels vorgegeben ist.

Gemäß einer Ausführungsform weist das jeweilige Scharnier einen zylindrischen Scharnierstift des Fixierbügels oder des Trägers auf, der von einer Scharnierklammer des Trägers bzw. des Fixierbügels umgriffen wird, insbesondere teilumfänglich. Durch den zylindrischen Scharnierstift wird die Bewegung des Fixierbügels in die Offenstellung oder Geschlossenstellung ermöglicht. Im Gegensatz beispielsweise zu einer stoffschlüssig angeformten Lasche oder zu einem Kugelgelenk werden durch den zylindrischen Scharnierstift weniger Freiheitsgrade in der Bewegung des Fixierbügels erreicht. Hierdurch resultiert nur eine einzige Schwenkachse für die Bewegung des Fixierbügels, woraus eine einfache, intuitive und verschleißarme Handhabung mit wenigen Verkantungsmöglichkeiten des Fixierbügels ermöglicht wird.

Gemäß einer Ausführungsform ist der Fixierbügel um eine Schwenkachse schwenkbar, die parallel zu der Längsachse des Trägers verläuft. Somit kann der Fixierbügel in der Geschlossenstellung den Aufnahmebereich parallel zu der Erstreckungsebene einer Vorderseite des Trägers umschließen.

Gemäß einer Ausführungsform ist der Fixierbügel mittels zweier Scharnieren an dem Träger schwenkbar gelagert, die in Flucht zueinander angeordnet und entlang der Längsachse des Trägers voneinander beabstandet sind. Durch die Bewegung des Fixierbügels über zwei Scharniere wird die Führung des Fixierbügels stabiler. Der Fixierbügel kann insbesondere im Wesentlichen eine X-Form aufweisen; hierbei bilden die beiden Scharniere die Enden der X-Form auf einer Seite des Trägers.

Gemäß einer bevorzugten Ausführungsform weist der Fixierbügel ein freies Ende auf, das mittels einer Rasteinrichtung an dem Träger einrastbar ist. Durch das Vorsehen einer Rasteinrichtung ist ein einfaches und insbesondere einhändiges Öffnen und Schließen des Fixierbügels möglich. Durch die Rasteinrichtung wird der Fixierbügel in seiner Geschlossenstellung fest an dem Träger arretiert, und das Zweirad-Schloss wird hierdurch sicher im Aufnahmebereich der Halterungsanordnung festgelegt.

Gemäß einer weiteren vorteilhaften Ausführungsform erstreckt sich der Fixierbügel entlang der Längsachse des Trägers über zumindest die Hälfte der Länge des Trägers, und die Rasteinrichtung erstreckt sich entlang der Längsachse des Trägers über zumindest ein Drittel der Ausdehnung des Fixierbügels. Durch eine derartige in Bezug auf die Gesamtlänge des Trägers relativ lange Rasteinrichtung (z.B. mit Raststeg und Rastnase) von mindestens einem Drittel des Trägers kann ein besonders stabiler Rastschluss erreicht werden. Hierdurch wird die Festlegung des Zweirad-Schlosses in dem Aufnahmebereich der Halterungsanordnung verbessert, was insbesondere bei relativ schweren und/oder langgestreckten Zweirad-Schlössern von Vorteil ist.

Gemäß einer weiteren Ausführungsform weist der Träger und/oder der Fixierbügel bezüglich der Längsachse des Trägers beiderseits der Rasteinrichtung einen jeweiligen Führungssteg auf, der eine Bewegung des eingerasteten Endes des Fixierbügels relativ zu dem Träger entlang der Längsachse begrenzt. Durch derartige Führungsstege an den beiden Enden der Rasteinrichtung wird die Stabilität des Rastschlusses verbessert, da die Führungsstege ein gegenseitiges Verschieben der beiderseitigen Rastelemente (z.B. Raststeg und Rastnase) beispielsweise bei einem Verwinden der Halterungsanordnung verhindern, wie dies bei einem schweren Zweirad-Schloss während der Fahrt aufgrund von Erschütterungen auftreten kann. Der jeweilige Führungssteg kann auch bewirken oder dazu beitragen, dass der geschlossene Fixierbügel nicht versehentlich geöffnet wird, z.B. während der Fahrt mit dem Zweirad durch das Bein oder den Fuß des Benutzers. Hierfür kann der jeweilige Führungssteg das freie Ende des Fixierbügels und/oder eine dort befindliche Handhabe zumindest teilweise überdecken (in Flucht, d.h. parallel zu der Längsachse des Trägers betrachtet).

Gemäß einer weiteren vorteilhaften Ausführungsform weist das freie Ende des Fixierbügels im Bereich der Rasteinrichtung eine Handhabe zum Ergreifen des freien Endes des Fixierbügels auf, wobei die Handhabe in Richtung des Trägers ausgerichtet ist. Mit anderen Worten weist der Fixierbügel eine Handhabe zum Ergreifen und Betätigen (insbesondere Öffnen) des Fixierbügels auf, wobei die Handhabe jedoch (von der Frontseite bzw. entlang der genannten Querachse betrachtet) - abgesehen von einer verdickten Ausführung - im Wesentlichen nicht über den Fixierbügel seitlich übersteht, sondern in Richtung des Trägers der Halterungsanordnung abgewinkelt ist (beispielsweise im rechten Winkel). Die Handhabe ist somit in Richtung des Rahmenrohrs des Zweirads abgewinkelt, an dem die Halterungsanordnung befestigt ist. Die Handhabe kann als ein Griffsteg ausgebildet sein. Mit Hilfe der Handhabe wird ein einfaches und insbesondere einhändiges Öffnen und Schließen des Fixierbügels ermöglicht. Durch ein Ziehen an der Handhabe kann der Benutzer den Rastschluss der Rasteinrichtung überwinden und das freie Ende des Fixierbügels vom Träger lösen. Da die Handhabe zumindest im Wesentlichen in Richtung des Trägers der Halterungsanordnung bzw. in Richtung des zugeordneten Rahmenrohrs zeigt, kann der Fixierbügel während der Fahrt nicht durch das Bein oder den Fuß des Benutzers versehentlich geöffnet werden.

Gemäß einer bevorzugten Ausführungsform weist das bewegliche Fixierelement (insbesondere der genannte Fixierbügel) wenigstens einen Federabschnitt auf, der dazu ausgebildet ist, in der Geschlossenstellung des Fixierelements eine Andruckkraft auf das Zweirad-Schloss auszuüben. Durch den Federabschnitt wird eine Geschlossenstellung des Fixierelements mit einer Andruckkraft ermöglicht, die zwischen dem Fixierelement und dem im Aufnahmebereich der Halterungsanordnung befindlichen Zweirad-Schlosses wirksam ist. Diese Andruckkraft und insbesondere auch die zwischen dem Zweirad-Schloss und dem Träger erzeugte Gegenkraft (Reaktionskraft) sowie die hierdurch in seitlicher Richtung wirksamen Reibungskräfte verbessern die Fixierung des Zweirad-Schlosses in dem Aufnahmebereich. Durch Ausbildung eines Federabschnitts kann auch ein mögliches Spiel bei nicht passgenauen Schlössern in dem Aufnahmebereich der Halterungsanordnung beseitigt werden. Hierdurch können insbesondere auch unerwünschte Rüttelgeräusche unterbunden werden, die ansonsten während der Fahrt mit dem Zweirad aufgrund der hierbei auftretenden Erschütterungen auftreten könnten.

Gemäß einer Ausführungsform ist der Federabschnitt rückfedernd ausgebildet, insbesondere in einer Richtung, die quer (vorzugsweise senkrecht) zu der Erstreckungsrichtung des Federabschnitts verläuft. Bei einer elastischen Verformung des Federabschnitts kann somit eine Rückstellkraft hervorgerufen werden, um die erläuterte Andruckkraft auf das Zweirad-Schloss zu erzeugen.

Insbesondere kann das Fixierelement selbst, oder ein Teil des Fixierelements (insbesondere der genannte Basisabschnitt des Fixierbügels), den Federabschnitt bilden, wobei das Fixierelement bzw. der den Federabschnitt bildende Teil des Fixierelements rückfedernd ausgebildet ist.

Gemäß einer weiteren Ausführungsform ist der Federabschnitt bezüglich der Erstreckungsrichtung des Fixierelements schräg ausgerichtet. Der Federabschnitt kann hierdurch über die Erstreckungsebene des Fixierelements in der Umgebung des Federabschnitts überstehen, insbesondere in Richtung des Aufnahmebereichs für das Zweirad-Schloss (bezogen auf die Geschlossenstellung des Fixierelements). Die Ausrichtung des Federabschnitts lässt sich bezüglich der Erstreckungsrichtung des Fixierelements bei dieser Ausführungsform durch einen spitzen Winkel definieren. Durch eine schräge Ausrichtung des Federabschnitts relativ zu dem Fixierelement (zumindest in der Umgebung des Federabschnitts) wird ein spielfreies Festlegen des Zweirad-Schlosses im Aufnahmebereich der Halterungsanordnung, aufgrund der dadurch erhöhten Andruckkraft, verbessert.

Alternativ oder zusätzlich hierzu kann der Federabschnitt bezüglich der Erstreckungsrichtung des Fixierelements in Richtung des Aufnahmebereichs für das Zweirad-Schloss geneigt sein. Durch die Neigung des Federabschnitts in Richtung des Aufnahmebereichs wird die Entstehung der Andruckkraft auf das Zweirad-Schloss unterstützt.

Gemäß einer Ausführungsform weist das Fixierelement zwei Federabschnitte auf, die - abgesehen von einer Schrägstellung in Richtung des Aufnahmebereichs für das Zweirad-Schloss - in zueinander zumindest im Wesentlichen entgegengesetzte Richtungen weisen. Durch die unterschiedlichen Richtungen der Federabschnitte wird eine gegenseitige Beeinträchtigung der Andruckkräfte durch die Federabschnitte unterbunden, und die Federabschnitte können zusätzlich an unterschiedlichen Stellen des Zweirad-Schlosses angreifen. Durch die Verwendung von zwei Federabschnitten kann eine noch zuverlässigere Fixierung des im Aufnahmebereich befindlichen Zweirad-Schlosses erreicht werden.

Gemäß einer Ausführungsform ist der Federabschnitt (bzw. die mehreren Federabschnitte) an dem Fixierelement integral ausgebildet. Hierdurch kann der Federabschnitt auf besonders einfache Weise hergestellt werden, da keine separate Fertigung oder Befestigung des Federabschnitts erforderlich ist. Ferner wird hierdurch einem möglichen Verschleiß durch Reibung einzelner Komponenten im Federabschnitt entgegengewirkt. Zusätzlich wird eine stetige, rückfedernde Wirkung des Federabschnitts ermöglicht, da sich keinerlei Befestigungsmittel (bspw. Schrauben, Federelemente) lockern oder lösen können.

Alternativ oder zusätzlich hierzu kann der jeweilige Federabschnitt durch eine mehrseitige Freistellung an dem Fixierelement ausgebildet sein. Durch eine teilumfängliche Freistellung des Federabschnitts kann der Federabschnitt sich zur Anpassung an die Geometrie des Zweirad-Schlosses verformen.

Gemäß einer Ausführungsform ist der jeweilige Federabschnitt zungenförmig ausgebildet. Durch eine solche Form des Federabschnitts wird eine zuverlässige Fixierung des aufgenommenen Zweirad-Schlosses, bei gleichzeitig geringer Verformung und geringem Verschleiß, erzielt. Zusätzlich erleichtert die, im Vergleich zu einer komplexen Form, einfache Form die Herstellung des Federabschnitts und damit des gesamten Fixierelements.

Gemäß einer vorteilhaften Ausführungsform ist an dem Träger ferner wenigstens ein Seitenstabilisierungselement vorgesehen ist, welches in der Offenstellung des Fixierelements (vorzugsweise auch in der Geschlossenstellung) das in dem Aufnahmebereich aufgenommene Zweirad-Schloss gegen eine Bewegung entlang einer seitlichen Richtung abstützt, die senkrecht zu der genannten Längsachse des Trägers und der genannten Querachse verläuft. Ein derartiges Seitenstabilisierungselement kann das korrekte Einsetzen des Zweirad-Schlosses in den Aufnahmebereich erleichtern. Ferner kann ein derartiges Seitenstabilisierungselement das Zweiradschloss, welches typischerweise eine Längsform aufweist und somit bei seitlichen Erschütterungen relativ hohe Drehmomente auf das Stützelement und das Fixierelement ausüben kann, in seitlicher Richtung abstützen, ohne die genannten weiteren Vorteile der Halterungsanordnung zu beeinträchtigen (einfache Handhabung der Halterungsanordnung bzw. Einsetzen des Zweirad-Schlosses, universelle Verwendbarkeit für verschiedene Längen von Zweirad-Schlössern). Vorzugsweise sind an dem Träger wenigstens zwei Seitenstabilisierungselemente vorgesehen, nämlich bezogen auf die genannte seitliche Richtung beiderseits des Aufnahmebereichs für das Zweirad-Schloss. Das jeweilige Seitenstabilisierungselement kann beispielsweise in Form eines seitlichen Stegs an dem Träger ausgebildet sein. Das jeweilige Seitenstabilisierungselement braucht jedoch nicht nach Art einer Gehäusewand ausgebildet zu sein; ausreichend ist bereits eine relativ geringe Höhe (entlang der genannten Querachse), die beispielsweise ca. ein Drittel oder ein Viertel der lichten Weite des Aufnahmebereichs entlang der genannten Querachse (in der Geschlossenstellung des Fixierelements) beträgt. Auch braucht das jeweilige Seitenstabilisierungselement sich entlang der Längsachse des Trägers nicht über die gesamte Länge des Aufnahmebereichs zu erstrecken; ausreichend ist eine Erstreckung über einen Teil der Länge des Aufnahmebereichs.

Gemäß einer Ausführungsform ist der Träger nach Art einer länglichen Platte ausgebildet, die sich entlang der Längsachse erstreckt.

Gemäß einer weiteren Ausführungsform kann der Träger an seiner Rückseite eine Anlegeplatte aufweisen, die an dem Träger insbesondere lösbar befestigt sein kann. Durch eine solche lösbare Befestigung ist es möglich, zuerst die Anlegeplatte an dem Rohrabschnitt zu befestigen und anschließend den Träger auf der Anlegeplatte zu montieren.

Alternativ oder zusätzlich hierzu kann der Träger an seiner Rückseite eine Anlegeplatte aufweisen, welche aus einem weicheren Material besteht als der Träger. Hierdurch kann ein verbessertes Anliegen des Trägers an dem Rohrabschnitt des Zweirads erreicht werden, wobei die Anlegeplatte insbesondere einen (relativ zu dem Träger) erhöhten Reibungskoeffizienten aufweisen und/oder eine Dämpfung bewirken kann. Die Anlegeplatte kann - wie vorstehend erläutert - an dem Träger lösbar befestigt oder mit dem Träger integral ausgebildet sein (beispielsweise als sogenanntes 2K-Spritzgießteil).

Der Träger oder die genannte Anlegeplatte kann an der Rückseite einen konkaven Querschnitt aufweisen, um einen verbesserten Formschluss mit dem Rohrabschnitt des Zweirads zu erreichen.

Die genannte Befestigungseinrichtung des Trägers kann beispielsweise mehrere entlang der Längsachse des Trägers verteilte Befestigungsöffnungen zum Durchführen von Schrauben und/oder seitliche Schlitze zum Durchführen eines Befestigungsbands (z.B. mit einem Klettverschlusselement) aufweisen.

Die Halterungsanordnung kann generell aus einem verschleißfesten Polymer gefertigt werden.

Die Erfindung bezieht sich auch auf eine Schlossanordnung mit einer Halterungsanordnung nach einer der vorgenannten Ausführungsformen und mit einem Zweirad-Schloss vom Typ eines Faltschlosses, wobei das Zweirad-Schloss einen Schlosskörper und einen daran befestigten Gelenkstabbügel aufweist, welcher mehrere schwenkbar miteinander verbundene Gelenkstäbe aufweist, die zu einer achsparallelen Anordnung zusammenfaltbar sind, wobei die genannte Aussparung des Zweirad-Schlosses zwischen dem Schlosskörper und dem Gelenkstabbügel gebildet ist.

Die Erfindung bezieht sich ferner auf ein Schlosssystem mit einer Halterungsanordnung nach einer der vorgenannten Ausführungsformen und mit wenigstens zwei verschiedenen Zweirad-Schlössern vom Typ eines Faltschlosses, wobei das jeweilige Zweirad-Schloss einen Schlosskörper und einen daran befestigten Gelenkstabbügel aufweist, welcher mehrere schwenkbar miteinander verbundene Gelenkstäbe aufweist, die zu einer achsparallelen Anordnung zusammenfaltbar sind, wobei die genannte Aussparung des jeweiligen Zweirad-Schlosses zwischen dem Schlosskörper und dem Gelenkstabbügel gebildet ist, und wobei die wenigstens zwei verschiedenen Zweirad-Schlösser sich hinsichtlich ihrer Länge und insbesondere der Länge ihres jeweiligen Gelenkstabbügels voneinander unterscheiden. Hierdurch kann eine einzige Halterungsanordnung wahlweise für ein System von mehreren Faltschlössern verschiedener Länge (z.B. zwei, drei oder noch mehr unterschiedliche Faltschlösser) universell verwendet werden.

Die Erfindung wird nachfolgend lediglich beispielhaft unter Bezugnahme auf die Zeichnungen erläutert. Gleiche oder gleichartige Elemente sind darin mit denselben Bezugszeichen gekennzeichnet.
Fig. 1 zeigt eine Perspektivansicht einer Halterungsanordnung für ein Zweirad-Schloss mit einem Fixierelement in der Offenstellung von schräg vorn.
Fig. 2 zeigt eine Vorderansicht der Halterungsanordnung mit dem Fixierbügel in der Offenstellung.
Fig. 3 und 4 zeigen eine Seitenansicht von links bzw. eine Draufsicht der Halterungsanordnung mit dem Fixierbügel in der Geschlossenstellung.
Fig. 5 zeigt eine Perspektivansicht der Halterungsanordnung mit einem darin aufgenommenen Zweirad-Schloss von schräg hinten, wobei der Fixierbügel sich in der Geschlossenstellung befindet.

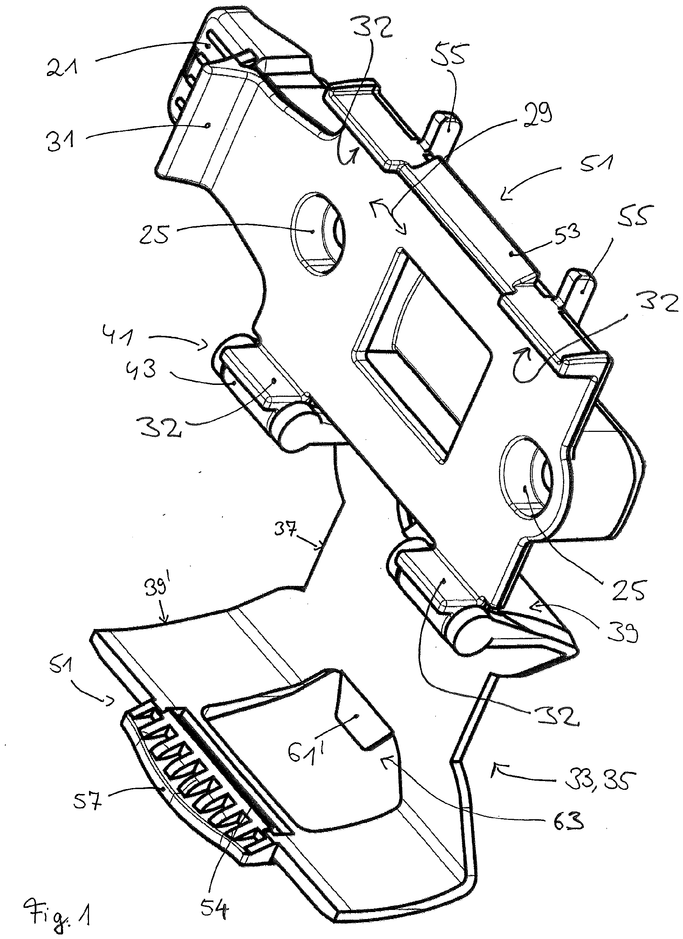

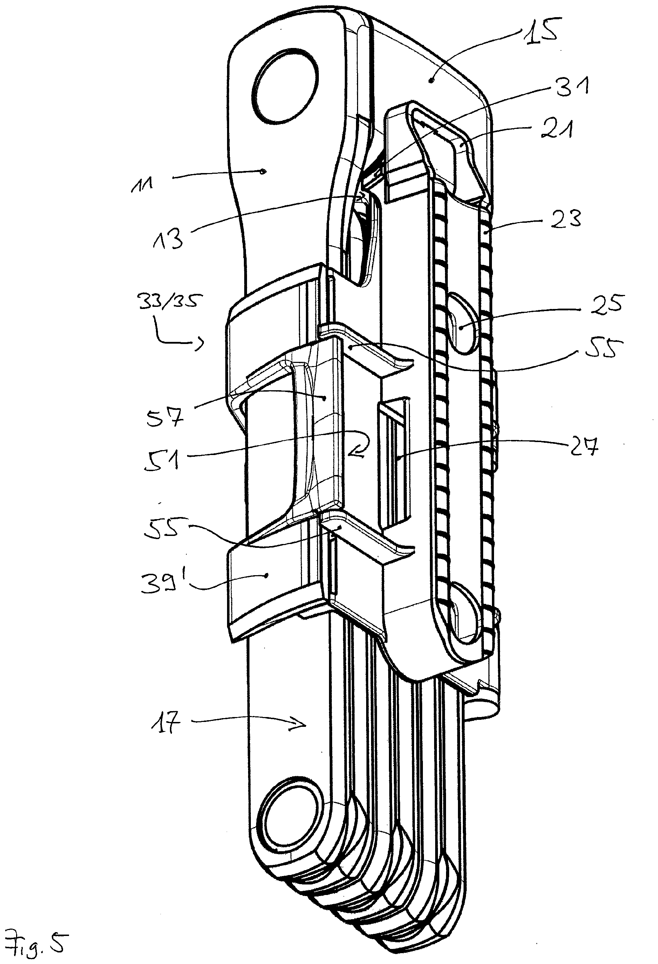

Die Fig. 1 bis 5 zeigen verschiedene Ansichten einer Halterungsanordnung für ein Zweirad-Schloss 11 (Fig. 5) vom Typ eines Faltschlosses. Ein solches Faltschloss umfasst üblicherweise einen Schlosskörper 15 und einen daran befestigten Gelenkstabbügel 17, welcher mehrere schwenkbar miteinander verbundene Gelenkstäbe aufweist, die zu einem kompakten Paket zusammengefaltet werden können. Hierdurch ergeben sich für das Zweirad-Schloss 11 und insbesondere den Gelenkstabbügel 17 im Wesentlichen quaderförmige Ausmaße mit zwei Schmalseiten und zwei Breitseiten entlang des Umfangs. Des Weiteren bildet das zusammengefaltete Zweirad-Schloss 11 zwischen dem Schlosskörper 15 und dem Gelenkstabbügel 17 eine durchgehende Aussparung 13 im oberen Bereich der beiden Breitseiten aus.

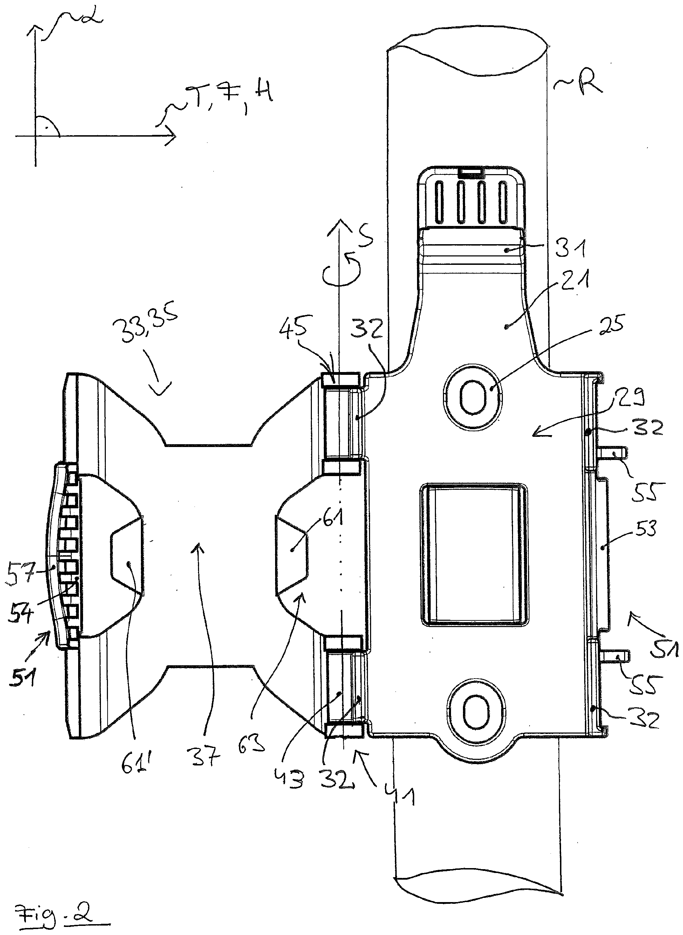

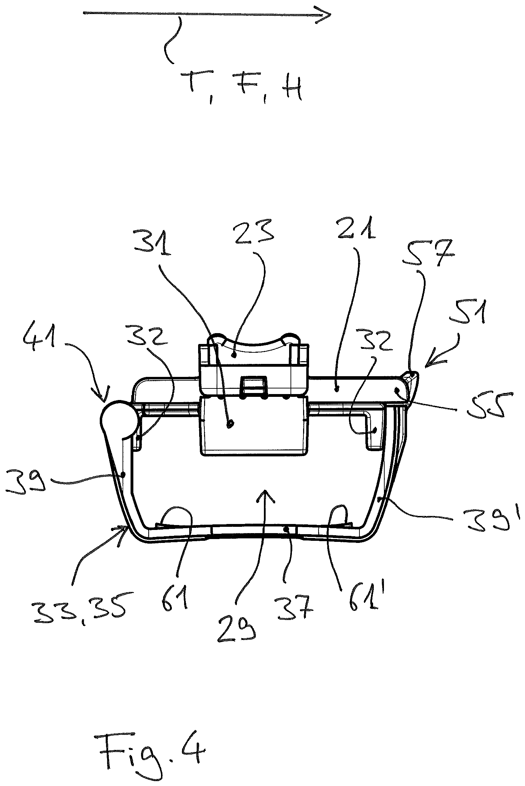

Die Halterungsanordnung für das Zweirad-Schloss 11 umfasst einen als Grundplatte dienenden Träger 21, der sich entlang einer Längsachse L erstreckt und an seiner Rückseite eine im Querschnitt konkave gewölbte Anlegeplatte 23 (siehe Fig. 4) aufweist. Die Anlegeplatte 23 ist lösbar an der Unterseite des Trägers 21 befestigt. Der Träger 21 kann mit Hilfe mehrerer Befestigungsöffnungen 25 und seitlicher Schlitze 27 an einem Rohrabschnitt R eines Zweirads (Fig. 2) befestigt werden. Durch die Befestigungsöffnungen 25 können Schrauben durchgeführt und an dem Rohrabschnitt R befestigt werden. Mit Hilfe eines Befestigungsbandes kann der Träger 21 befestigt werden, indem das Band durch die seitlichen Schlitze 27 geführt wird. Die Anlegeplatte 23 kann zudem aus einem weicheren Material, in Bezug auf den Träger 21, bestehen, um eine optimale Anpassung der Anlegeplatte 23 an den Rohrabschnitt R zu ermöglichen.

Die Halterungsanordnung bildet einen Aufnahmebereich 29, in welchem sich bei Verwendung das Zweirad-Schloss 11 befindet. Der Aufnahmebereich 29 ist dabei parallel zu der Längsachse L des Trägers 21 ausgerichtet. Bei einer Aufnahme eines Zweirad-Schlosses 11 im Aufnahmebereich 29 liegt das Zweirad-Schloss 11 mit einer Breitseite an der in Fig. 2 gezeigten Vorderseite des Trägers 21 an.

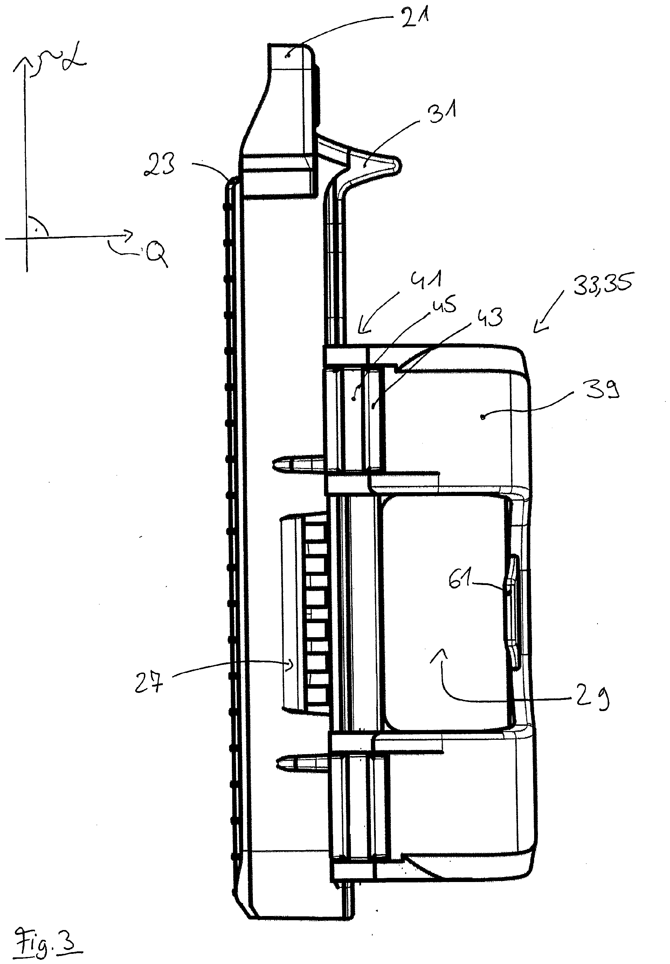

Am oberen Ende des Trägers 21 ragt ein Stützelement 31 hervor. Das Stützelement 31 ist zumindest im Wesentlichen starr, insbesondere integral, an dem Träger 21 ausgebildet. Das Stützelement 31 bildet einen Vorsprung des Trägers 21 und ist dafür ausgebildet, in die Aussparung 13 des Zweirad-Schlosses 11 einzugreifen, sodass das Zweirad-Schloss 11 an dem Stützelement 31 eingehängt werden kann und das Zweirad-Schloss 11 somit bezüglich der Längsachse L des Trägers 21 in dem Aufnahmebereich 29 des Trägers 21 festgelegt ist. Das Stützelement 31 weist die Form eines Aufliegestegs auf. Das Stützelement 31 erstreckt sich zumindest im Wesentlichen entlang einer Querachse Q, welche quer (bei dem gezeigten Ausführungsbeispiel senkrecht) zu der Längsrichtung L verläuft (Fig. 3). Das Stützelement 31 bzw. der Aufliegesteg erstreckt sich ferner entlang einer Richtung T, die senkrecht zur Längsachse L und zur Querrichtung Q verläuft (Fig.2). Entlang der Querachse Q verjüngt sich das Stützelement 31, sodass das Stützelement 31 leichter in die Aussparung 13 des Zweirad-Schlosses 11 eingeführt werden kann.

Ferner sind an dem Träger 21 in der seitlichen Umgebung des Aufnahmebereichs 29 mehrere Seitenstabilisierungselemente in Form von seitlichen Stegen 32 ausgebildet. Die seitlichen Stege 32 sind zumindest im Wesentlichen starr, insbesondere integral, an dem Träger 21 ausgebildet. Die seitlichen Stege 32 bewirken ein Abstützen des in dem Aufnahmebereich 29 aufgenommenen Zweirad-Schlosses 11 gegen eine Bewegung entlang einer seitlichen Richtung H, die senkrecht zu der Längsachse L des Trägers 21 und der Querachse Q verläuft.

Um das an dem Stützelement 31 eingehängte Zweirad-Schloss 11 in dem Aufnahmebereich 29 zu fixieren, ist an einer Seite des Trägers 21 ein Fixierelement 33 beweglich befestigt. Das Fixierelement 33 ist dabei zumindest im Wesentlichen entlang einer Richtung F ausgerichtet, die senkrecht zur Längsachse L des Trägers 21 und senkrecht zur Querachse Q des Stützelements 31 verläuft (Fig. 2). Die Richtung F verläuft somit parallel zu der genannten Erstreckungsrichtung T des Stützelements 31 bzw. Aufliegestegs. Das Fixierelement 33 ist senkrecht zu seiner Erstreckungsrichtung F, nicht jedoch entlang seiner Erstreckungsrichtung F elastisch. Aufgrund dieser Elastizitätseigenschaften können einzelne Abschnitte des Fixierelements 33 zwar verbogen werden, jedoch nicht in die Länge gezogen werden. Durch diese Einschränkung in der Elastizität des Fixierelements 33 können die Handhabung des Fixierelements im Allgemeinen und insbesondere eine kraftschlüssige Fixierung des Fixierelements 33 vereinfacht werden.

Das Fixierelement 33 ist bei dem hier gezeigten Ausführungsbeispiel als ein Fixierbügel 35 ausgebildet, der an dem Träger 21 zwischen einer Offenstellung (Fig. 1 und 2) und einer Geschlossenstellung (Fig. 3 bis 5) frei schwenkbar gelagert ist.

Der Fixierbügel 35 ist im Wesentlichen U-förmig ausgebildet und weist einen bezüglich des Aufnahmebereichs 29 konvex gewölbten Basisabschnitt 37 auf, der zwischen zwei Schenkeln 39, 39' angeordnet ist. Durch die oben genannten Elastizitätseigenschaften ist die U-Form des Fixierbügels 35 insgesamt elastisch. Im geschlossenen Zustand umschließt der U-förmige Fixierbügel 35 den Aufnahmebereich 29 in Bezug zur Längsachse L im Umfang von drei Seiten; die vierte Seite wird von dem Träger 21 selbst abgedeckt. Durch die zusätzliche konvexe Wölbung des Fixierbügels 35 wird in der Geschlossenstellung eine Andruckkraft auf das im Aufnahmebereich 29 befindliche Zweirad-Schloss 11 in Richtung des Trägers 21 ausgeübt, sodass das Zweirad-Schloss 11 durch Kraftschluss in dem Aufnahmebereich 29 lagefixiert wird. Ferner bewirkt die erläuterte sich verjüngende Längsschnittform des Stützelements 31, dass bei einer Kraftbeaufschlagung des an dem Stützelement 31 eingehängten Zweirad-Schlosses 11 dieses spielfrei an dem Stützelement 31 zu liegen kommt. Der Fixierbügel 35 ist im Wesentlichen formstabil ausgebildet; hierdurch wird die Handhabung zusätzlich erleichtert.

Der Fixierbügel 35 kann vom Benutzer im Wesentlichen kräftefrei und intuitiv leicht erfassbar in die Geschlossenstellung oder Offenstellung geschwenkt werden. Wie vor allem in Fig. 1 und 2 ersichtlich, ist der Fixierbügel 35 mittels zweier Scharniere 41 an dem Träger 21 befestigt. Das jeweilige Scharnier 41 umfasst eine Scharnierklammer 43 des Trägers 21, die einen Scharnierstift 45 des Fixierbügels 35 teilumfänglich umgreift. Der Fixierbügel 35 ist mittels der Scharniere 41 um eine zur Längsachse L parallele Schwenkachse S (siehe Fig. 2) schwenkbar.

Bei dem hier gezeigten Ausführungsbeispiel ist der Fixierbügel 35 im Wesentlichen X-förmig ausgebildet, wobei die zwei Schenkel 39, 39' dementsprechend eine mittige Aussparung aufweisen. Ferner ist der Fixierbügel 35 hier mittels zweier Scharniere 41 an dem Träger 21 frei schwenkbar befestigt. Die beiden Scharniere 41 sind hierbei in Flucht zueinander angeordnet und entlang der Längsachse des Trägers 21 voneinander beabstandet.

Zum Arretieren des Fixierbügels 35 in der Geschlossenstellung (Fig. 3 bis 5) weist der Fixierbügel 35 an seinem freien Ende eine Rasteinrichtung 51 auf. Die Rasteinrichtung 51 umfasst einen Raststeg 53 des Trägers 21 und eine Rastnase 54 des Fixierbügels 35, die an dem Raststeg 53 einrastbar ist. Ferner umfasst der Träger 21 beiderseits des Raststegs 53 einen jeweiligen Führungssteg 55. Die Führungsstege 55 begrenzen eine Bewegung des eingerasteten Endes des Fixierbügels 35 bzw. der Rastnase 54 relativ zu dem Träger 21 entlang der Längsachse L, wodurch die Stabilität des Rastschlusses verbessert wird.

Der X-förmige Fixierbügel 35 einschließlich der Scharniere 41 und der Rasteinrichtung 51 erstreckt sich entlang der Längsachse L des Trägers 21 über mehr als die Hälfte der Länge des Trägers 21. Die Rasteinrichtung 51 wiederum erstreckt sich entlang der Längsachse L über ca. die Hälfte der Ausdehnung des Fixierbügels 35. Hierdurch ergibt sich eine besonders hohe Stabilität der Rastverbindung in der Geschlossenstellung des Fixierbügels 35.

Der Fixierbügel 35 weist auf Höhe der Rastnase 54 eine Handhabe 57 zum Ergreifen des freien Endes des Fixierbügels 35 auf. Durch die Handhabe 57 wird das Öffnen des Fixierbügels 35 bzw. das Lösen des Rastschlusses erleichtert. Die Handhabe 57 ist durch eine Erweiterung des Schenkels 39' des U-förmigen Fixierbügels 35 gebildet, die in der Geschlossenstellung des Trägers 21 (Fig. 3 bis 5) in Richtung des Trägers 21 ausgerichtet ist.

Wie besonders gut aus der Draufsicht gemäß Fig. 4 ersichtlich ist, verhindern die Führungsstege 55 auch ein versehentliches Öffnen des Fixierbügels 35, indem die Führungsstege 55 entlang der Längsachse L betrachtet den Schenkel 39' und die dort vorgesehene Handhabe 57 teilweise überdecken.

Der Fixierbügel 35 weist bei dem hier gezeigten Ausführungsbeispiel zwei rückfedernde Federabschnitte 61, 61' auf. Die Federabschnitte 61, 61' sind an dem Basisabschnitt 37 des Fixierbügels 35 durch eine jeweilige mehrseitige Freistellung 63 integral ausgebildet und sind bezüglich der Erstreckungsrichtung des Basisabschnitts 37 leicht schräg geneigt. Die zungenförmigen Federabschnitte 61, 61' zeigen hierdurch in der Geschlossenstellung des Fixierbügels 35 in Richtung des Aufnahmebereichs 29. Im Übrigen weisen die beiden Federabschnitte 61, 61' in zueinander entgegengesetzte Richtungen. Durch den jeweiligen Federabschnitt 61, 61' wird in der Geschlossenstellung des Fixierbügels 35 eine Andruckkraft auf das Zweirad-Schloss 11 ausgeübt, wobei auf Grund der rückfedernden Ausbildung der Federabschnitte 61, 61' bei deren Verformung eine Rückstellkraft hervorgerufen wird. Durch die Ausübung der Andruckkraft wird auch eine Gegenkraft zwischen dem Träger 21 und dem Zweirad-Schloss 11 erzeugt. Diese Andruckkraft bzw. Gegenkraft verbessert die Fixierung des Zweirad-Schlosses 11 noch weiter.

Was die Benutzung der in Fig. 1 bis 5 gezeigten Halterungsanordnung betrifft, so kann bei einer Offenstellung des Fixierbügels 35 (Fig. 1 und 2) das Zweirad-Schloss 11 (Fig. 5) auf einfache Weise an dem Stützelement 31 eingehängt werden, wobei das Stützelement 31 entlang der Querachse Q in die Aussparung 13 des Zweirad-Schlosses 11 eingeführt wird. Da das Stützelement 31 von der frei zugänglichen Vorderseite des Trägers 21 absteht, kann das Zweirad-Schloss 11 zumindest im Wesentlichen frontal auf den Träger 21 aufgesetzt werden, ohne dass das Einhängen des Zweirad-Schlosses 11 an dem Stützelement 31 durch Rahmenabschnitte des Zweirads in der Umgebung der Halterungsanordnung behindert wird. Durch ein nachfolgendes Schwenken des Fixierbügels 35 um die Schwenkachse S kann der Fixierbügel 35 in die Geschlossenstellung gebracht werden, um das Zweirad-Schloss 11 gegen ein unbeabsichtigtes Lösen von dem Stützelement 31 entlang der Querachse Q zu sichern. Diese Schwenkbewegung wird durch die Scharniere 41 ermöglicht. Mit Vollendung der Schwenkbewegung wird durch die Rasteinrichtung 51 ein sicherer Rastschluss erreicht, der den Fixierbügel 35 in der Geschlossenstellung arretiert. Das Zweirad-Schloss 11 ist somit in dem Aufnahmebereich 29 der Halterungsanordnung umfänglich fixiert und insgesamt bezüglich der Längsachse L des Trägers 21 sowie in seitlicher Richtung, insbesondere entlang der Querachse Q, festgelegt (siehe Fig. 5). Insgesamt ergibt sich eine einfache Handhabung der Halterungsanordnung wobei auch eine Einhand-Bedienung möglich ist.

Ein weiterer Vorteil der gezeigten Halterungsanordnung besteht in der möglichen Aufnahme verschiedener Zweirad-Schlösser 11 mit unterschiedlichen Längen. Dadurch, dass das Stützelement 31 das einzige Element ist, welches das Zweirad-Schloss in der Offenstellung des Fixierbügels 35 im Aufnahmebereich 29 hält, gibt es keine weitere Begrenzung des Aufnahmebereichs 29 entlang der Längsachse L nach unten oder oben. Somit können Zweirad-Schlösser 11 unterschiedlicher Längen eingehängt und anschließend durch Schließen des Fixierbügels 35 fixiert werden.

In einer weiteren, nicht dargestellten Ausführungsform ist es möglich, dass das Fixierelement 33 anstelle des Fixierbügels 35 eine längenelastische Lasche aufweist, die über das in dem Aufnahmebereich 29 befindliche Zweirad-Schloss 11 gespannt wird.

In noch einer weiteren, nicht dargestellten Ausführungsform ist es möglich, dass an dem Fixierelement 33 lediglich ein einziger Federabschnitt 61 vorgesehen ist, und/oder dass der oder die Federabschnitt(e) - abgesehen von einer gewissen Schrägstellung in Richtung des Aufnahmebereichs 29 - zumindest im Wesentlichen parallel zu der Längsachse L des Trägers ausgerichtet ist/sind und sich über einen Teil (insbesondere mehr als die Hälfte) der Breite oder nahezu die gesamte Breite des Fixierelements 33 erstreckt/erstrecken. Hierdurch kann der jeweilige Federabschnitt an mehreren oder sogar sämtlichen Gelenkstäben des Zweirad-Schlosses 11 anliegen, um das Zweirad-Schloss 11 in dem Aufnahmebereich 29 festzulegen und insbesondere auch eine Rüttelbewegung der einzelnen Gelenkstäbe relativ zueinander zu verhindern.

### Bezugszeichenliste

- 11: Zweirad-Schloss
- 13: Aussparung
- 15: Schlosskörper
- 17: Gelenkstabbügel
- 21: Träger
- 23: Anlegeplatte
- 25: Befestigungsöffnung
- 27: seitlicher Schlitz
- 29: Aufnahmebereich
- 31: Stützelement
- 32: seitlicher Steg
- 33: Fixierelement
- 35: Fixierbügel
- 37: Basisabschnitt
- 39, 39': Schenkel
- 41: Scharnier
- 43: Scharnierklammer
- 45: Scharnierstift
- 51: Rasteinrichtung
- 53: Raststeg
- 54: Rastnase
- 55: Führungssteg
- 57: Handhabe
- 61, 61': Federabschnitt
- 63: Freistellung

- H: seitliche Richtung
- F: Erstreckungsrichtung des Fixierbügels
- L: Längsrichtung des Trägers
- Q: Querrichtung
- R: Rohrabschnitt
- S: Schwenkachse
- T: Erstreckungsrichtung des Stützelements

## Patentansprüche

1. Halterungsanordnung für ein Zweirad-Schloss (11) vom Typ eines Faltschlosses, mit einem Träger (21), der sich entlang einer Längsachse (L) erstreckt und eine Befestigungseinrichtung (25, 27) zur Befestigung des Trägers (21) an einem Rohrabschnitt (R) eines Zweirads aufweist, wobei der Träger (21) einen Aufnahmebereich (29) zum Aufnehmen des Zweirad-Schlosses (11) begrenzt, und
einem an dem Träger (21) gelagerten, zwischen einer Offenstellung und einer Geschlossenstellung beweglichen Fixierelement (33) zum Festlegen des Zweirad-Schlosses (11) in dem Aufnahmebereich (29);
wobei an dem Träger (21) ein Stützelement (31) vorgesehen ist, welches das in dem Aufnahmebereich (29) aufgenommene Zweirad-Schloss (11) gegen eine Bewegung entlang der Längsachse (L) des Trägers (21) abstützt, wobei das Stützelement (31) von dem Träger (21) entlang einer quer zu der Längsachse (L) ausgerichteten Querachse (Q) absteht und dazu ausgebildet ist, in eine Aussparung (13) des Zweirad-Schlosses (11) einzugreifen, und
wobei das Fixierelement (33) dazu ausgebildet ist, in der Geschlossenstellung das Zweirad-Schloss (11) gegen eine Entnahme von dem Stützelement (31) entlang der Querachse (Q) zu blockieren,
**dadurch gekennzeichnet,**
**dass** das Stützelement (31) das einzige Element der Halterungsanordnung ist, welches in der Offenstellung des Fixierelements (33) das in dem Aufnahmebereich (29) aufgenommene Zweirad-Schloss (11) gegen eine Bewegung entlang der Längsachse (L) des Trägers (21) abstützt.

2. Halterungsanordnung nach Anspruch 1, wobei das Stützelement (31) mit dem Träger (21) zumindest im Wesentlichen starr verbunden ist;
und/oder
wobei das Stützelement (31) integral an dem Träger (21) ausgebildet ist.

3. Halterungsanordnung nach einem der vorhergehenden Ansprüche,
wobei das Stützelement (31) die Form eines Aufliegestegs aufweist, der sich zumindest im Wesentlichen entlang der Querachse (Q) und entlang einer Richtung (T) erstreckt, die senkrecht zu der Längsachse (L) und zu der Querachse (Q) verläuft;
und/oder
wobei das Stützelement (31) sich entlang der Querachse (Q) verjüngt.

4. Halterungsanordnung nach einem der vorhergehenden Ansprüche,
wobei das Fixierelement (33) senkrecht zu seiner jeweiligen Erstreckungsrichtung (F), nicht jedoch entlang seiner jeweiligen Erstreckungsrichtung (F) elastisch ist;
und/oder
wobei das Fixierelement (33) zumindest im Wesentlichen formstabil ausgebildet ist.

5. Halterungsanordnung nach einem der vorhergehenden Ansprüche,
wobei das Fixierelement (33) bezüglich des Aufnahmebereichs (29) für das Zweirad-Schloss (11) konvex gewölbt ist;
und/oder
wobei das Fixierelement (33) in der Geschlossenstellung den Aufnahmebereich (29) für das Zweirad-Schloss (11) umfänglich schließt.

6. Halterungsanordnung nach einem der vorhergehenden Ansprüche,
wobei das Fixierelement (33) einen Fixierbügel (35) aufweist, der an dem Träger (21) zwischen der Offenstellung und der Geschlossenstellung schwenkbar gelagert ist.

7. Halterungsanordnung nach Anspruch 6, wobei der Fixierbügel (35) im Wesentlichen U-förmig ist;
und/oder
wobei der Fixierbügel (35) einen Basisabschnitt (37) aufweist, der zwischen zwei Schenkelabschnitten (39, 39') angeordnet ist;
und/oder
wobei der Fixierbügel (35) mittels wenigstens eines Scharniers (41) an dem Träger (21) schwenkbar gelagert ist;
und/oder
wobei der Fixierbügel (35) um eine Schwenkachse (S) schwenkbar ist, die parallel zu der Längsachse (L) des Trägers (21) verläuft;
und/oder
wobei der Fixierbügel (35) mittels zweier Scharniere (41) an dem Träger (21) schwenkbar gelagert ist, die in Flucht zueinander angeordnet und entlang der Längsachse (L) des Trägers (21) voneinander beabstandet sind.

8. Halterungsanordnung nach Anspruch 6 oder 7,
wobei der Fixierbügel (35) ein freies Ende aufweist, das mittels einer Rasteinrichtung (51) an dem Träger (21) einrastbar ist.

9. Halterungsanordnung nach Anspruch 8,
wobei der Fixierbügel (35) sich entlang der Längsachse (L) des Trägers (21) über zumindest die Hälfte der Länge des Trägers (21) erstreckt, und wobei die Rasteinrichtung (51) sich entlang der Längsachse (L) des Trägers (21) über zumindest ein Drittel der Ausdehnung des Fixierbügels (35) erstreckt;
und/oder
wobei der Träger (21) und/oder der Fixierbügel (35) bezüglich der Längsachse (L) des Trägers (21) beiderseits der Rasteinrichtung (51) einen jeweiligen Führungssteg (55) aufweist/aufweisen, der eine Bewegung des eingerasteten Endes des Fixierbügels (35) relativ zu dem Träger (21) entlang der Längsachse (L) begrenzt;
und/oder
wobei das freie Ende des Fixierbügels (35) im Bereich der Rasteinrichtung (51) eine Handhabe (57) zum Ergreifen des freien Endes des Fixierbügels (35) aufweist, wobei die Handhabe (57) in Richtung des Trägers (21) ausgerichtet ist.

10. Halterungsanordnung nach einem der vorhergehenden Ansprüche,
wobei das Fixierelement (33) wenigstens einen Federabschnitt (61, 61') aufweist, der dazu ausgebildet ist, in der Geschlossenstellung des Fixierelements (33) eine Andruckkraft auf das Zweirad-Schloss (11) auszuüben.

11. Halterungsanordnung nach Anspruch 10,
wobei der Federabschnitt (61, 61') bezüglich der Erstreckungsrichtung (F) des Fixierelements (33) schräg ausgerichtet ist;
und/oder
wobei der Federabschnitt (61, 61') bezüglich der Erstreckungsrichtung (F) des Fixierelements (33) in Richtung des Aufnahmebereichs (29) für das Zweirad-Schloss (11) geneigt ist;
und/oder
wobei das Fixierelement (33) zwei Federabschnitte (61, 61') aufweist, die in zueinander zumindest im Wesentlichen entgegengesetzte Richtungen weisen.

12. Halterungsanordnung nach Anspruch 10 oder 11, wobei der Federabschnitt (61, 61') an dem Fixierelement (33) integral ausgebildet ist;
und/oder
wobei der Federabschnitt (61, 61') durch eine mehrseitige Freistellung (63) an dem Fixierelement (33) ausgebildet ist;
und/oder
wobei der Federabschnitt (61, 61') zungenförmig ausgebildet ist.

13. Halterungsanordnung nach einem der vorhergehenden Ansprüche, wobei an dem Träger (21) wenigstens ein Seitenstabilisierungselement (32) vorgesehen ist, welches in der Offenstellung des Fixierelements (33) das in dem Aufnahmebereich (29) aufgenommene Zweirad-Schloss (11) gegen eine Bewegung entlang einer seitlichen Richtung (H) abstützt, die senkrecht zu der genannten Längsachse (L) des Trägers (21) und der Querachse (Q) verläuft.

14. Schlossanordnung mit einer Halterungsanordnung nach einem der vorhergehenden Ansprüche und mit einem Zweirad-Schloss (11) vom Typ eines Faltschlosses, wobei das Zweirad-Schloss (11) einen Schlosskörper (15) und einen daran befestigten Gelenkstabbügel (17) aufweist, welcher mehrere schwenkbar miteinander verbundene Gelenkstäbe aufweist, die zu einer achsparallelen Anordnung zusammenfaltbar sind, wobei die genannte Aussparung (13) des Zweirad-Schlosses (11) zwischen dem Schlosskörper (15) und dem Gelenkstabbügel (17) gebildet ist.

15. Schlosssystem mit einer Halterungsanordnung nach einem der Ansprüche 1 bis 13 und mit wenigstens zwei verschiedenen Zweirad-Schlössern (11) vom Typ eines Faltschlosses, wobei das jeweilige Zweirad-Schloss (11) einen Schlosskörper (15) und einen daran befestigten Gelenkstabbügel (17) aufweist, welcher mehrere schwenkbar miteinander verbundene Gelenkstäbe aufweist, die zu einer achsparallelen Anordnung zusammenfaltbar sind, wobei die genannte Aussparung (13) des jeweiligen Zweirad-Schlosses (11) zwischen dem Schlosskörper (15) und dem Gelenkstabbügel (17) gebildet ist, und wobei die wenigstens zwei verschiedenen Zweirad-Schlösser (11) sich hinsichtlich ihrer Länge voneinander unterscheiden.

## Claims

1. A holder arrangement for a two-wheeler lock (11) of the type of a folding lock, comprising
a carrier (21) which extends along a longitudinal axis (L) and has a fastening device (25, 27) for fastening the carrier (21) to a tube section (R) of a two-wheeler, wherein the carrier (21) bounds a reception region (29) for receiving the two-wheeler lock (11); and
a fixing element (33) supported at the carrier (21) and movable between an open position and a closed position for fixing the two-wheeler lock (11) in the reception region (29),
wherein a support element (31) is provided at the carrier (21) and supports the two-wheeler lock (11) received in the reception region (29) against a movement along the longitudinal axis (L) of the carrier (21), with the support element (31) projecting from the carrier (21) along a transverse axis (Q) aligned transversely to the longitudinal axis (L) and being configured to engage into a cut-out (13) of the two-wheeler lock (11); and
wherein the fixing element (33) is configured to block the two-wheeler lock (11) against a removal from the support element (31) along the transverse axis (Q) in the closed position,
**characterized in that**
the support element (31) is the only element of the holder arrangement which supports the two-wheeler lock (11) received in the reception region (29) against a movement along the longitudinal axis (L) of the carrier (21) in the open position of the fixing element (33).

2. A holder arrangement in accordance with claim 1,
wherein the support element (31) is at least substantially rigidly connected to the carrier (21);
and/or
wherein the support element (31) is formed integrally at the carrier (21).

3. A holder arrangement in accordance with one of the preceding claims, wherein the support element (31) has the shape of a support web which extends at least substantially along the transverse axis (Q) and along a direction (T) that extends perpendicular to the longitudinal axis (L) and to the transverse axis (Q);
and/or
wherein the support element (31) tapers along the transverse axis (Q).

4. A holder arrangement in accordance with any one of the preceding claims, wherein the fixing element (33) is elastic perpendicular to its respective direction of extent (F), but not along its respective direction of extent (F); and/or
wherein the fixing element (33) is at least substantially stable in shape.

5. A holder arrangement in accordance with any one of the preceding claims, wherein the fixing element (33) is convexly arched with respect to the reception region (29) for the two-wheeler lock (11);
and/or
wherein the fixing element (33) peripherally closes the reception region (29) for the two-wheeler lock (11) in the closed position.

6. A holder arrangement in accordance with any one of the preceding claims, wherein the fixing element (33) has a fixing hoop (35) which is supported at the carrier (21) pivotable between the open position and the closed position.

7. A holder arrangement in accordance with claim 6,
wherein the fixing hoop (35) is substantially of U shape;
and/or
wherein the fixing hoop (35) has a base section (37) which is arranged between two limb sections (39, 39');
and/or
wherein the fixing hoop (35) is supported at the carrier (21) pivotable by means of at least one hinge (41);
and/or
wherein the fixing hoop (35) is pivotable about a pivot axis (S) which extends in parallel with the longitudinal axis (L) of the carrier (21); and/or
wherein the fixing hoop (35) is supported at the carrier (21) pivotable by means of two hinges (41) which are arranged in alignment with one another and are spaced apart from one another along the longitudinal axis (L) of the carrier (21).

8. A holder arrangement in accordance with claim 6 or claim 7,
wherein the fixing hoop (35) has a free end which is latchable to the carrier (21) by means of a latch device (51).

9. A holder arrangement in accordance with claim 8,
wherein the fixing hoop (35) extends along the longitudinal axis (L) of the carrier (21) over at least half the length of the carrier (21), and wherein the latch device (51) extends along the longitudinal axis (L) of the carrier (21) over at least one third of the extent of the fixing hoop (35);
and/or
wherein the carrier (21) and/or the fixing hoop (35) has/have a respective guide web (55) at both sides of the latch device (51) with respect to the longitudinal axis (L) of the carrier (21), said guide web (55) bounding a movement of the latched end of the fixing hoop (35) relative to the carrier (21) along the longitudinal axis (L);
and/or
wherein the free end of the fixing hoop (35) has a handle (57) in the region of the latch device (51) for gripping the free end of the fixing hoop (35), with the handle (57) being aligned in the direction of the carrier (21).

10. A holder arrangement in accordance with any one of the preceding claims, wherein the fixing element (33) has at least one spring section (61, 61') which is configured to exert a pressing force onto the two-wheeler lock (11) in the closed position of the fixing element (33).

11. A holder arrangement in accordance with claim 10,
wherein the spring section (61, 61') is aligned obliquely with respect to the direction of extent (F) of the fixing element (33);
and/or
wherein the spring section (61, 61') is inclined with respect to the direction of extent (F) of the fixing element (33) in the direction of the reception region (29) for the two-wheeler lock (11);
and/or
wherein the fixing element (33) has two spring sections (61, 61') which face in mutually at least substantially opposite directions.

12. A holder arrangement in accordance with claim 10 or claim 11,
wherein the spring section (61, 61') is formed integrally at the fixing element (33);
and/or
wherein the spring section (61, 61') is formed by a multilateral clearance (63) at the fixing element (33);
and/or
wherein the spring section (61, 61') is of tongue shape.

13. A holder arrangement in accordance with any one of the preceding claims, wherein at least one lateral stabilization element (32) is provided at the carrier (21) and supports the two-wheeler lock (11) received in the reception region (29) in the open position of the fixing element (33) against a movement along a lateral direction (H) which extends perpendicular to said longitudinal axis (L) of the carrier (21) and of the transverse axis (Q).

14. A lock arrangement having a holder arrangement in accordance with any one of the preceding claims and having a two-wheeler lock (11) of the type of a folding lock, wherein the two-wheeler lock (11) has a lock body (15) and a jointed bar hoop (17) which is fastened thereto and which has a plurality of jointed bars which are pivotably connected to one another and which can be folded together to form an axially parallel arrangement, with said cut-out (13) of the two-wheeler lock (11) being formed between the lock body (15) and the jointed bar hoop (17).

15. A lock system having a holder arrangement in accordance with any one of claims 1 to 13 and having at least two different two-wheeler locks (11) of the type of a folding lock, wherein the respective two-wheeler lock (11) has a lock body (15) and a jointed bar hoop (17) which is fastened thereto and which has a plurality of jointed bars which are pivotably connected to one another and which can be folded together to form an axially parallel arrangement, wherein said cut-out (13) of the respective two-wheeler lock (11) is formed between the lock body (15) and the jointed bar hoop (17), and wherein the at least two different two-wheeler locks (11) differ from one another with respect to their lengths.

## Revendications

1. Ensemble porteur pour un antivol (11) pour deux-roues du type antivol pliable, comprenant
un support (21) s'étendant le long d'un axe longitudinal (L) et comprenant un moyen de fixation (25, 27) pour fixer le support (21) à une portion tubulaire (R) d'un deux-roues, le support (21) délimitant une zone de réception (29) pour recevoir l'antivol (11), et
un élément de fixation (33) monté sur le support (21) et mobile entre une position ouverte et une position fermée pour immobiliser l'antivol (11) dans la zone de réception (29) ;
dans lequel
un élément de soutien (31) est prévu sur le support (21), qui soutient l'antivol (11) reçu dans la zone de réception (29) à l'encontre d'un mouvement le long de l'axe longitudinal (L) du support (21), l'élément de soutien (31) faisant saillie du support (21) le long d'un axe transversal (Q) orienté transversalement à l'axe longitudinal (L) et étant réalisé pour s'engager dans une échancrure (13) de l'antivol (11), et
l'élément de fixation (33) est réalisé pour bloquer en position fermée l'antivol (11) à l'encontre d'un enlèvement de l'élément de soutien (31) le long de l'axe transversal (Q),
**caractérisé en ce que**
l'élément de soutien (31) est le seul élément de l'ensemble porteur qui, dans la position ouverte de l'élément de fixation (33), soutient l'antivol (11) reçu dans la zone de réception (29) à l'encontre d'un mouvement le long de l'axe longitudinal (L) du support (21).

2. Ensemble porteur selon la revendication 1,
dans lequel
l'élément de soutien (31) est relié au support (21) de manière au moins sensiblement rigide ;
et/ou
l'élément de soutien (31) est formé intégralement sur le support (21).

3. Ensemble porteur selon l'une des revendications précédentes,
dans lequel
l'élément de soutien (31) présente la forme d'une barrette de repos s'étendant au moins sensiblement le long de l'axe transversal (Q) et le long d'une direction (T) perpendiculaire à l'axe longitudinal (L) et à l'axe transversal (Q);
et/ou
l'élément de soutien (31) va en se rétrécissant le long de l'axe transversal (Q).

4. Ensemble porteur selon l'une des revendications précédentes,
dans lequel
l'élément de fixation (33) est élastique perpendiculairement à sa direction d'extension respective (F), mais non pas le long de sa direction d'extension respective (F) ;
et/ou
l'élément de fixation (33) est réalisé de façon au moins sensiblement stable en forme.

5. Ensemble porteur selon l'une des revendications précédentes,
dans lequel
l'élément de fixation (33) est courbé de manière convexe par rapport à la zone de réception (29) pour l'antivol (11) ;
et/ou
l'élément de fixation (33) en position fermée referme de manière circonférentielle la zone de réception (29) pour l'antivol (11).

6. Ensemble porteur selon l'une des revendications précédentes,
dans lequel
l'élément de fixation (33) comprend un étrier de fixation (35) qui est monté sur le support (21) de façon mobile en pivotement entre la position ouverte et la position fermée.

7. Ensemble porteur selon la revendication 6,
dans lequel
l'étrier de fixation (35) est sensiblement en forme de U ;
et/ou
l'étrier de fixation (35) comprend une portion de base (37) disposée entre deux portions de branche (39, 39') ;
et/ou
l'étrier de fixation (35) est monté sur le support (21) de manière mobile en pivotement au moyen d'au moins une charnière (41) ;
et/ou
l'étrier de fixation (35) peut pivoter autour d'un axe de pivotement (S) qui s'étend parallèlement à l'axe longitudinal (L) du support (21) ;
et/ou
l'étrier de fixation (35) est monté sur le support (21) de façon mobile en pivotement au moyen de deux charnières (41) qui sont disposées en alignement l'une par rapport à l'autre et à distance l'une de l'autre le long de l'axe longitudinal (L) du support (21).

8. Ensemble porteur selon la revendication 6 ou 7,
dans lequel
l'étrier de fixation (35) présente une extrémité libre qui peut être enclenchée sur le support (21) à l'aide d'un moyen d'enclenchement (51).

9. Ensemble porteur selon la revendication 8,
dans lequel
l'étrier de fixation (35) s'étend le long de l'axe longitudinal (L) du support (21) sur au moins la moitié de la longueur du support (21), et
le moyen d'enclenchement (51) s'étend le long de l'axe longitudinal (L) du support (21) sur au moins un tiers de l'extension de l'étrier de fixation (35) ;
et/ou
le support (21) et/ou l'étrier de fixation (35) présente(nt) une nervure de guidage (55) respective des deux côtés du moyen d'enclenchement (51) par rapport à l'axe longitudinal (L) du support (21), laquelle nervure de guidage limite un mouvement de l'extrémité enclenchée de l'étrier de fixation (35) par rapport au support (21) le long de l'axe longitudinal (L) ;
et/ou
l'extrémité libre de l'étrier de fixation (35) présente une manette (57) dans la zone du moyen d'enclenchement (51) pour saisir l'extrémité libre de l'étrier de fixation (35), la manette (57) étant orientée en direction du support (21).

10. Ensemble porteur selon l'une des revendications précédentes,
dans lequel
l'élément de fixation (33) comporte au moins une portion formant ressort (61, 61') réalisée pour exercer une force de pression sur l'antivol (11) dans la position fermée de l'élément de fixation (33).

11. Ensemble porteur selon la revendication 10,
dans lequel
la portion formant ressort (61, 61') est orientée en oblique par rapport à la direction d'extension (F) de l'élément de fixation (33) ;
et/ou
la portion formant ressort (61, 61') est inclinée par rapport à la direction d'extension (F) de l'élément de fixation (33) en direction de la zone de réception (29) pour l'antivol (11) ;
et/ou
l'élément de fixation (33) présente deux portions formant ressort (61, 61') qui sont dirigées dans des directions au moins sensiblement opposées l'une à l'autre.

12. Ensemble porteur selon la revendication 10 ou 11,
dans lequel
la portion formant ressort (61, 61') est réalisée intégralement sur l'élément de fixation (33) ;
et/ou
la portion formant ressort (61, 61') est formée par un dégagement (63) à plusieurs côtés sur l'élément de fixation (33) ;
et/ou
la portion formant ressort (61, 61') est réalisée en forme de languette.

13. Ensemble porteur selon l'une des revendications précédentes,
dans lequel
sur le support (21) est prévu au moins un élément de stabilisation latérale (32) qui, dans la position ouverte de l'élément de fixation (33), soutient l'antivol (11) reçu dans la zone de réception (29) à l'encontre d'un mouvement le long d'une direction latérale (H) perpendiculaire audit axe longitudinal (L) du support (21) et à l'axe transversal (Q).

14. Ensemble d'antivol comprenant un ensemble porteur selon l'une des revendications précédentes et un antivol (11) pour deux-roues du type antivol pliable, l'antivol (11) comprenant un corps d'antivol (15) et un étrier à barres articulées (17) fixé à celui-ci et présentant plusieurs barres articulées reliées de façon mobile en pivotement les unes aux autres qui peuvent être repliées pour donner un agencement d'axe parallèle, ladite échancrure (13) de l'antivol (11) étant formée entre le corps d'antivol (15) et l'étrier à barres articulées (17).

15. Système d'antivol comportant un ensemble porteur selon l'une des revendications 1 à 13 et au moins deux antivols (11) pour deux-roues différents du type antivol pliable, l'antivol (11) respectif comprenant un corps d'antivol (15) et un étrier à barres articulées (17) fixé sur celui-ci, qui présente plusieurs barres articulées reliées entre elles de façon mobile en pivotement qui peuvent être repliées pour donner un agencement d'axe parallèle, ladite échancrure (13) de l'antivol (11) respectif étant formée entre le corps d'antivol (15) et l'étrier à barres articulées (17), et lesdits au moins deux antivols (11) différents se distinguant l'un de l'autre par leur longueur.
